Europäisches Patentamt

European Patent Office

Office européen des brevets

(19)

(11) Veröffentlichungsnummer : **0 100 313**
**B1**

(12)

# EUROPÄISCHE PATENTSCHRIFT

(45) Veröffentlichungstag der Patentschrift :
22.10.86

(21) Anmeldenummer : 82902160.9

(22) Anmeldetag : 15.07.82

(86) Internationale Anmeldenummer :
PCT/DE 82/00149

(87) Internationale Veröffentlichungsnummer :
WO/8302836 (18.08.83 Gazette 83/19)

(51) Int. Cl.⁴ : **G 06 F 11/22, F 02 P 17/00**

(54) VERFAHREN UND VORRICHTUNG ZUR SELBSTÜBERPRÜFUNG VON MIKRORECHNERGESTEUERTEN SCHALTGERÄTEN, INSBESONDERE IN KRAFTFAHRZEUGEN.

(30) Priorität : 05.02.82 DE 3204003
26.05.82 DE 3219650

(43) Veröffentlichungstag der Anmeldung :
15.02.84 Patentblatt 84/07

(45) Bekanntmachung des Hinweises auf die Patenterteilung : 22.10.86 Patentblatt 86/43

(84) Benannte Vertragsstaaten :
AT CH DE FR GB LI SE

(56) Entgegenhaltungen :
FR-A- 1 375 994
FR-A- 2 460 007
US-A- 3 266 020
US-A- 3 711 691
US-A- 4 267 569
US-A- 4 271 512

(73) Patentinhaber : ROBERT BOSCH GMBH
Postfach 50
D-7000 Stuttgart 1 (DE)

(72) Erfinder : DENZ, Helmut
Rosenbergplatz 2
D-7000 Stuttgart 1 (DE)
Erfinder : ETZOLD, Peter
Hofäckern 1
D-7066 Baltmannsweiler (DE)
Erfinder : GRÖSCHEL, Wolfgang
Schwabstrasse 70B
D-7000 Stuttgart 1 (DE)
Erfinder : KAISER, Günther
Schweinfurthstrasse 10
D-7000 Stuttgart 40 (DE)
Erfinder : KRAEMER, Heinz
Max Eythstrasse 50
D-7314 Wernau (DE)
Erfinder : NITSCHKE, Werner
Roseggerweg 14
D-7257 Ditzingen (DE)
Erfinder : ZECHNALL, Martin
Holdergasse 26
D-7141 Schwieberdingen (DE)

## Beschreibung

### Stand der Technik

Die Erfindung betrifft ein Verfahren nach der Gattung des Hauptanspruchs sowie eine Vorrichtung zur Durchführung des Verfahrens. Selbstdiagnosegeräte für mikrorechnergesteuerte Schaltgeräte sind schon z. B. aus der DE-A-2 824 190, der DE-A-2 922 371 sowie der DE-A-3 121 645 bekannt. Bei diesen bekannten Systemen wird ebenfalls nach einer Fehlererkennung ein entsprechendes Datenwort in einem Speicher des Schaltgeräts selbst abgelegt und kann dann später in einer Werkstatt bzw. durch einen Prüfmechaniker über Zusatzgeräte herausgelesen und ausgewertet werden. Dazu ist gewöhnlich eine aufwendige serielle Schnittstelle notwendig, die viele Mikrorechner-Systeme nicht von vornherein aufweisen und/oder es sind aufwendige Zusatzeinrichtungen notwendig, um die Auswertung vorzunehmen. Diesen müssen gewöhnlich wiederum einen Mikrorechner enthalten. Solche Systems müssen mit jedem neuen Schaltgerät wiederum in kostenaufwendiger Weise geändert und angepaßt werden.

### Vorteile der Erfindung

Das erfindungsgemäße Verfahren mit den kennzeichnenden Merkmalen des Patentanspruchs 1 sowie die entsprechenden Vorrichtungen gemäß den Patentansprüchen 15 und 19 haben demgegenüber den Vorteil, daß die Diagnose mit einem handelsüblichen, gängigen Voltmeter vorgenommen werden kann. Im Schaltgerät selbst ist praktisch keine zusätzliche Hardware notwendig, außer gegebenenfalls ein größerer Speicher. Es kann eine erhebliche Absenkung der irrtümlichen Austauschrate von Schaltgeräten erwartet werden, da ein Schaltgerätfehler vom Prüfmechaniker höchstwahrscheinlich ausgeschlossen wird, wenn sich das Schaltgerät korrekt bei der Eigendiagnose meldet.

Eine ROM- bzw. RAM-Erweiterung im Schaltgerät ist unter Umständen gar nicht notwendig, da die vorhandenen Speicherplätze in der Normalfunktion oft nicht voll ausgenutzt sind.

Durch die in den abhängigen Patentansprüchen aufgeführten Maßnahmen sind vorteilhafte Weiterbildungen und Verbesserungen des im Hauptanspruch angegebenen Verfahrens möglich. Besonders vorteilhaft ist es, im Normalbetrieb des Schaltgeräts nur ein Kurzdiagnoseprogramm vorzusehen und erst bei Nichterkennung eines Fehlers durch dieses Kurzdiagnoseprogramm im Stillstand des Kraftfahrzeugs bzw. dessen Antriebsaggregats eine Volldiagnose durchzuführen.

Weiterhin ist es besonders vorteilhaft, den Schaltbefehl für die Volldiagnose bzw. zur Auslösung der Fehlersignalfolge für das Voltmeter über einen Schalter zu geben, insbesondere über einen in einem Diagnose-Zwischenstecker vorgesehenen Schalter. Der Schaltbefehl wird durch Kurzschließen wenigstens eines Eingangs des Schaltgeräts, vorzugsweise des Drehzahlgeber-Eingangs vollzogen. Dadurch wird eine hohe Zuverlässigkeit erhalten, da beim Diagnoseaufruf das lebensnotwendige Drehzahlgebersignal kurzgeschlossen ist, dessen Nichtvorhandensein ohnehin zum Stillstand des Antriebsaggregats führt. Diese Zuverlässigkeit kann noch dadurch erhöht werden, daß eine bestimmte Kombination von Eingangssignalen kurzgeschlossen wird. Wenn sowohl die Kurzdiagnose, wie auch die Volldiagnose keinen Fehler erkennt, dann wird vorteilhaft ein Programm zur Überprüfung von durch das Schaltgerät gesteuerten elektrischen Vorrichtungen, insbesondere Schaltendstufen und Stellglieder, gestartet. Dieses Programm erzeugt dann in Abhängigkeit der Betätigung bestimmter Geber bestimmte Signalfolgen an einem zugeordneten Ausgang des Schaltgeräts, bzw. an einer zugeordneten, zu steuernden Vorrichtung.

Wird der Schalter im Diagnose-Zwischenstecker zum Aufrufen der Diagnosesignalfolge bzw. der Volldiagnose betätigt, dann wird vorteilhaft ein Kontrollampenausgang zur Anzeige eines eingespeicherten Fehler-Datenworts auf einen Ausgang im Diagnose-Zwischenstecker gelegt, an den ein Voltmeter angeschlossen werden kann. Dieses Voltmeter könnte natürlich auch direkt im Diagnose-Zwischenstecker integriert sein. Besonders vorteilhaft kann ein solcher Diagnose-Zwischenstecker auch für eine Vielzahl verschiedener Schaltgeräte vorgesehen sein, indem durch Normierung der entsprechenden Eingänge, die kurzzuschließen sind, ein einheitlicher Diagnosebefehl erzeugt werden kann.

### Zeichnung

Zwei Ausführungsbeispiele der Erfindung sind in der Zeichnung dargestellt und in der nachfolgenden Beschreibung näher erläutert. Es zeigen Figur 1 ein Ausführungsbeispiel mit einem Diagnose-Zwischenstecker und einem Schaltgerät, Figur 2 ein Flußdiagramm zur Erläuterung der Funktion des Schaltgeräts für die Zündung einer Brennkraftmaschine im Normalbetrieb, Figur 3 ein Flußdiagramm zur Erläuterung der Wirkungsweise der Ausgabe der Prüfsignalfolge sowie der Volldiagnose bei abgeschalteter Normalfunktion des Schaltgeräts und Figur 4 ein Flußdiagramm zur Erläuterung der Überprüfung von durch das Schaltgerät gesteuerten elektrischen Vorrichtungen bei Nichtvorliegen eines Fehler-Datenworts, Figur 5 ein zweites Ausführungsbeispiel ohne Diagnose-Zwischenstecker, Figur 6 ein Flußdiagramm zur Erläuterung der Funktion und Figur 7 ein Flußdiagramm zur Erläuterung einer beispielhaften Diagnosebedingung.

### Beschreibung des Ausführungsbeispiels

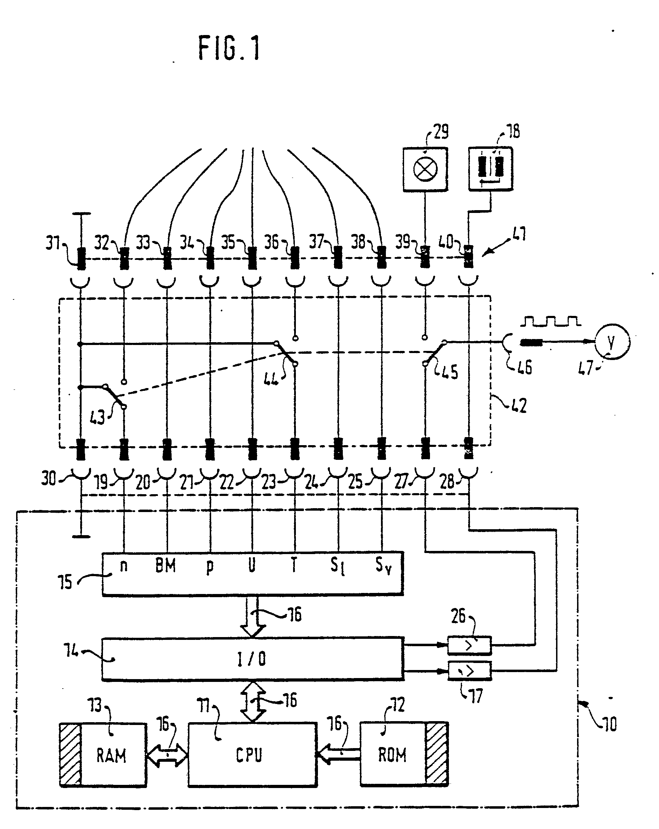

In dem in Figur 1 dargestellten Ausführungsbeispiel ist ein Schaltgerät 10 zur Steuerung der Zündung einer Brennkraftmaschine gezeigt, das in bekannter Weise aus einem Mikrorechner 11 (CPU) einem Festwertspeicher 12 (ROM) einem Arbeitsspeicher 13 (RAM), einem Eingangs/Ausgangs-Kreis 14 (I/O) sowie einem Signalaufbereitungskreis 15 besteht, die untereinander über Busleitungen 16 miteinander verbunden sind. Der Signalaufbereitungskreis 15 enthält dabei auch Vorrichtungen zur Störunterdrückung und zur Digitalisierung von Eingangsgrößen. Über den Eingangs/Ausgangs-Kreis 14 wird über eine Zündungs-Endstufe 17 eine Zündspule 18 gesteuert. An den Signalaufbereitungskreis 15 sind Gebersignale angelegt, in deren Abhängigkeit die Zündungsfunktion ablaufen soll. Diese Gebersignale stehen in Abhängigkeit der Drehzahl n, der Bezugsmarke Bm, des (Außen- und/oder Saugrohr-) Drucks p, der Vorsorgungsspannung U, der (Außen- und/oder Motor-) Temperatur T, der Stellung des Leerlaufschalters Sl sowie der Stellung des Vollastschalters Sv. Natürlich kann auch eine beliebige weitere Zahl von Parametern diesem Signalaufbereitungskreis 15 zugeführt werden. Die Zuführung erfolgt über Klemmen 19 bis 25. Ein solches Schaltgerät 10 mit einem Mikrorechner ist aus dem eingangs angegebenen Stand der Technik sowie aus dem dort aufgeführten Stand der Technik bekannt. Die Steuerung des Zündvorgangs stellt dabei lediglich eine von vielen Möglichkeiten dar. Durch solche Schaltgeräte lassen sich z. B. auch die Kraftstoffeinspritzung, die Getriebesteuerung, Antiblockierfunktionen der Räder, Fahrdatenfunktionen usw. kontrollieren und steuern. Das Prinzip ist jedoch darüber hinaus auf jedes andere µC-System außerhalb der Kfz-Technik übertragbar (z. B. Waschmaschinen, Fahrstuhlsteuerungen, Werkzeugmaschinen usw).

Ein weiterer Ausgang des Eingangs/Ausgangs- Kreises 14 ist über eine weitere Schaltstufe 26 mit einer Klemme 27 verbunden. Eine Klemme 39 ist an eine Kontrollampe 29 angeschlossen. Eine weitere Klemme 30 liegt an Masse. Die schraffiert dargestellten Bereiche der beiden Speicher 12, 13 stellen diejenigen Speicherplätze dar, die den Mehrbedarf für die Diagnose ausmachen. Wie bereits eingangs erwähnt, ist eine solche Erweiterung vielfach nicht notwendig, da die vorhandenen Speicherplätze für die Normalfunktionen nicht voll ausgenutzt sind. Darüber hinaus stellt dies bezüglich der Hardware einen minimalen Mehraufwand dar.

Im Normalbetrieb sind die Klemmen 30, 19 bis 25, 27, 28 mit den Steckkontakten 31 bis 40 eines Mehrfachsteckers 41 an einem Kabelbaum verbunden. Dabei sind die Steckkontakte 32 bis 38 mit den entsprechenden Gebern verbunden. Die Steckkontakte 39, 40 sind mit der Kontrollampe 29 bzw. mit der Zündspule 18 verbunden, und der Steckkontakt 31 ist an Masse angeschlossen. Für die Diagnose wird der Mehrfachstecker 41 herausgezogen und ein Diagnose-Zwischenstecker 42 dazwischengeschaltet bzw. dazwischengesteckt.

Dieser Diagnose-Zwischenstecker 42 verbindet die Klemmen 30, 19 bis 25, 27, 28 mit den Steckkontakten 31 bis 40. Dabei sind die Verbindungen zwischen den Klemmen 19, 23, 27 zu den Steckkontakten 32, 36, 39 durch Schalter 43, 44, 45 unterbrechbar. In der zweiten Schaltstellung (Diagnoseschaltstellung) sind dabei die Klemmen 19 und 23 über die Klemme 30 an Masse gelegt, während die Klemme 27 an eine Ausgangsklemme 46 des Diagnose-Zwischensteckers 42 gelegt ist. An diese Ausgangsklemme 46 ist ein Spannungsmeßgerät 47 (Voltmeter) anschließbar. Natürlich kann dieses Voltmeter 47 auch fest mit dem Diagnose-Zwischenstecker 42 verbunden oder in diesem integriert sein. Es kann auch zur Fehleranzeige der im Fahrzeug eingebaute und vom Zündsystem angesteuerte Drehzahlmesser verwendet werden.

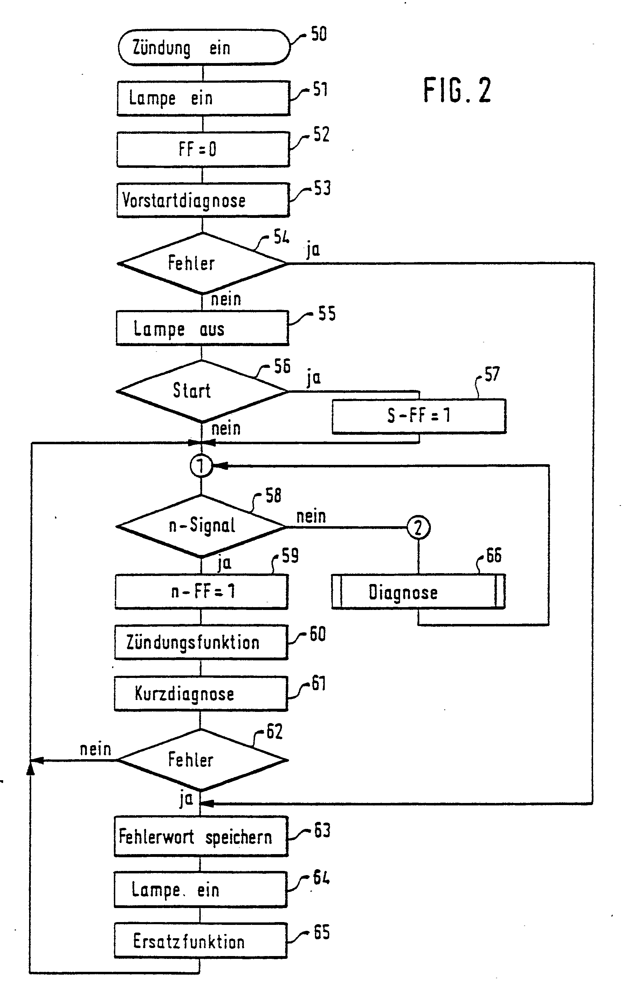

Die Wirkungsweise des in Figur 1 dargestellten Ausführungsbeispiels wird in folgendem anhand der in den Figuren 2 bis 4 dargestellten Verfahrensschritte (Flußdiagramme) erläutert. Eine entsprechende Programmierung des Schaltgeräts 10, bzw. des Speichers 12 ist eine jedem Fachmann geläufige Methode und erfolgt anhand der Programmiervorschriften des jeweils verwendeten Mikrorechner-Typs, wie sie in den zugehörigen Handbücher durch den Mikrorechner-Hersteller festgelegt sind. Das erfindungsgemäße Verfahren ließe sich natürlich auch prinzipiell durch Hardware-mäßige Beschaltung durchführen.

Gemäß Figur 2 wird zunächst die Zündung eingeschaltet (50), was gewöhnlich durch Verbinden des Schaltgeräts 10 mit einer Versorgungsspannungsquelle erfolgt. Danach wird über die Schaltstufe 26 ein Steuersignal an die Kontrollampe 29 gelegt. Zu diesem Zeitpunkt ist der Mehrfachstecker 41 noch direkt — ohne Zwischenschaltung des Diagnose-Zwischensteckers 42 — mit den Klemmen 30, 19 bis 25, 27, 28 verbunden. Die Kontrollampe 29 wird eingeschaltet (51). Dieses Einschalten erfolgt lediglich zur Überprüfung der Kontrollampe 29 selbst. Danach werden alle Flipflops, die im Mikrorechner enthalten sind (im Mikroprozessor 11 oder im Eingangs/Ausgangs-Kreis 14) auf Null gesetzt (52). Dies dient dazu, einen definierten Aufangszustand vorzugeben. Danach erfolgt eine Vorstartdiagnose (53), die bei stehendem Antriebsaggregat, also bei Stillstand der zugehörigen Brennkraftmaschine erfolgt. Dabei können z. B. Geber- oder sonstige Leitungen auf Kurzschluß oder spannungsführende Teile auf das Vorliegen der entsprechenden Spannung überprüft werden. Solche Selbstdiagnose-Vorgänge sind aus dem eingangs angegebenen Stand der Technik bekannt. Dabei wird entschieden, ob ein Fehler vorliegt (54). Ist dies nicht der Fall, dann erlischt die Kontrollampe 29 (55). Danach erfolgt ein Startversuch der Brennkraftmaschine (56). Wurde die Brennkraftmaschine dabei gestartet, so wird ein Start-Flipflop (S-FF) auf den Wert 1 gesetzt (57). Der nächste Schritt ist die Überprüfung, ob ein Drehzahlsignal (n-Signal) vorliegt (58). Zunächst sei davon ausgegangen, daß dies der Fall ist, wodurch ein Drehzahl-Flipflop (n-FF) auf den Wert 1 gesetzt wird (59). Danach erzeugt der Mikrorechner die eingentliche Zündungsfunktion (60) zur Erzeugung von Zündfunken in der Zündungsendstufe 18. Dies ist vielfach beschriebener Stand der Technik. Es erfolgt darauf eine Kurzdiagnose (61), d. h., es werden nur die wichtigsten Funktionen überprüft, um nicht zuviel Rechenzeit zu benötigen, die von der Rechenzeit für die Zündungsfunktion abgehen würde. Wird durch die Kurzdiagnose (61) kein Fehler festgestellt (62), so wird in einer Programmschleife zum Programmschritt (58) zurückgeführt. In dieser Programmschleife verläuft der reguläre Betrieb zur Erzeugung von Zündvorgängen.

Wird ein Fahler festgestellt (54 oder 62), so wird ein diesen Fehler kennzeichnendes Fehlerwort im Arbeitsspeicher 13 gespeichert (63). Die Kontrollampe 29 wird eingeschaltet (64) wodurch dem Fahrer angezeigt wird, daß ein Fehler vorliegt, und er eine Werkstatt aufzusuchen hat. Danach wird — bei Bedarf — auf eine Ersatz- oder Hilfsfunktion umgeschaltet (65). Das Umschalten eines Rechners oder einzelner Komponenten desselben auf eine Ersatzfunktion ist z. B. aus der DE-A-2 838 619 oder aus der DE-A-30 08 232 bekannt. Danach erfolgt eine Rückführung zum Programmschritt (58).

Bei eingeschalteter Kontrollampe 29 wird nun eine Werkstatt aufgesucht. Dort wird der Diagnose-Zwischenstecker 42 zwischen das Schaltgerät 10 und die Geberleitungen gesteckt. Durch das Ausschalten geht nun im allgemeinen das gespeicherte Fehler-Datenwort im Arbeitsspeicher 13 verloren, sofern nicht ein nichtflüchtiger Speicher verwendet wurde. Da zunächst die Geberleitungen über den Diagnose-Zwischenstecker 42 wie vorher mit dem Schaltgerät 10 verbunden sind, erfolgt der Start und der nachfolgende Betrieb wiederum gemäß Figur 2. Da der Fehler wieder auftreten wird, und sei es auch erst nach längerem Betrieb, wird die Kontrollampe infolge dieses Fehlers wieder aufleuchten (64) und das entsprechende Fehler-Datenwort eingespeichert werden. Im Betrieb der Brennkraftmaschine wird nunmehr auf den Diagnosebetrieb durch Umlegen der Schalter 43 bis 45 in die in Figur 1 dargestellte Schaltstellung umgeschaltet. Da nunmehr das für den Betrieb der Brennkraftmaschine unbedingt erforderliche Drehzahlsignal n auf Masse liegt, wird die Brennkraftmaschine ausgehen.

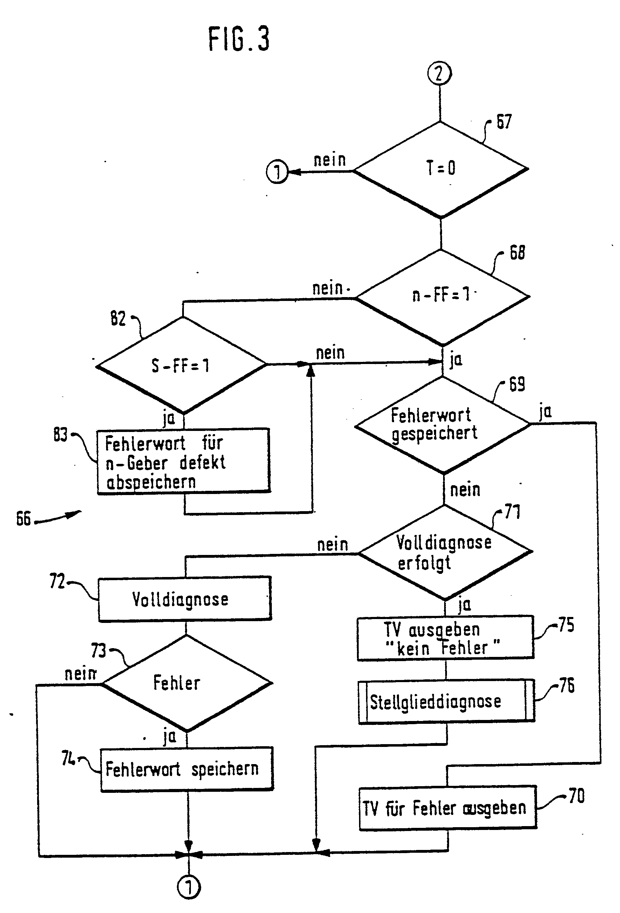

Vom Programmschritt 58 wird infolge des fehlenden Drehzahlsignals das Diagnoseprogramm (66) aufgerufen, dessen Verfahrensschritte in Figur 3 näher erläutert sind. Zunächst wird geprüft, ob die Klemme 23, an der gewöhnlich das Temperatursignal anliegt, ebenfalls an Masse liegt (67). Ist dies nicht der Fall, so wird direkt zum Programmschritt (58) zurückgeführt, wodurch eine Warteschleife entsteht, bis die Klemme 23 ebenfalls an Masse liegt. Liegen beide Klemmen 19, 23 nunmehr an Masse, so ist dies kennzeichnend dafür, daß das Diagnoseprogramm ablaufen soll. Prinzipiell können natürlich beliebige weitere Eingänge oder Kombinationen davon an Masse oder an einen bestimmten Signalpegel gelegt werden, um das Diagnoseprogramm einzuleiten. Es wird nunmehr geprüft, ob das Drehzahl-Flipflop den Wert 1 beinhaltet (68), d. h., ob vor der Umschaltung auf den Diagnosebetrieb ein Drehzahlsignal vorhanden war. Dies müßte im Normalfall zutreffen. Daraufhin wird abgefragt, ob ein Fehler-Datenwort gespeichert ist (69). Da die Kontrollampe 29 angesprochen hat, müßte dies der Fall sein. Der Rechner erzeugt nun eine Ausgangssignalfolge für das Voltmeter 47, deren Tastverhältnis (TV) eine bestimmte Zuordnung zum gespeicherten Fehler-Datenwort aufweist (70). Anstelle einer solchen Signalfolge könnte natürlich auch z. B. ein analoges Spannungssignal treten, das mit Hilfe eines Digital/Analog-Wandlers gebildet wurde. Das Voltmeter 47 wird auf einen bestimmten Wert ausschlagen, der für die Art des gespeicherten Fehlers kennzeichnend ist. Anhand von Tabellen lassen sich so die verschiedenen Fehlermöglichkeiten verschiedenen Spannungen zuordnen.

Danach wird zum Programmschritt (58) zurückgekehrt, wobei die beschriebene Schleife solange durchlaufen wird, bis die Fehlerindikation abgeschlossen ist.

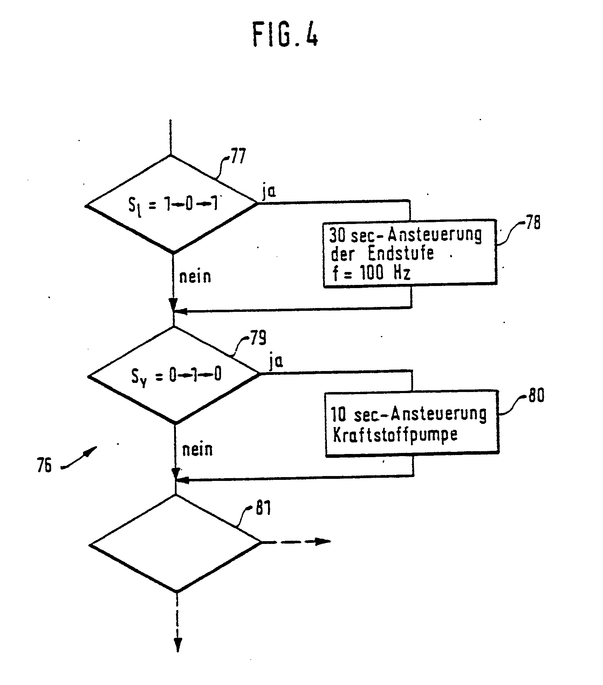

Tritt nun z. B. ein Fehler im Betrieb auf, ohne daß die Kontrollampe 29 aufleuchtet, so liegt ein Fehler vor, der durch die Kurzdiagnose (61) nicht erkannt worden ist, bzw. nicht erkannt werden kann. Im Programmschritt (69) wird daher festgestellt, daß kein Fehler-Datenwort gespeichert ist. Daraufhin wird abgefragt, ob bereits eine Volldiagnose erfolgt ist (71). Da dies in diesem Stadium nicht der Fall sein wird, erfolgt diese Volldiagnose (72). Die Volldiagnose kann nunmehr sehr ausführlich erfolgen, da keine Einschränkung bezüglich der Programmdauer mehr vorliegt und keine Rücksicht mehr auf ein Betriebsprogramm (Zündungsprogramm) genommen werden braucht. Je nachdem, ob nun ein Fehler erkannt wird oder nicht (73) wird nun ein entsprechendes Fehler-Datenwort eingespeichert (74) und zum Programmschritt (58) zurückgekehrt. Beim darauffolgenden Programmdurchlauf des Diagnoseprüfverfahrens wird nunmehr über den Programmschritt (69) zum Programmschritt (70) weitergeführt und eine Fehler-Signalfolge dem Voltmeter (47) zugeführt, sofern ein Fehler erkannt worden ist. Wurde kein Fehler erkannt, also kein Fehler-Datenwort gespeichert (69), so wird daraufhin festgestellt, daß eine Volldiagnose bereits erfolgt ist (71). Daraufhin wird dem Voltmeter 47 eine Signalfolge zugeführt, das einen Ausschlag erzeugt, der das Erkennen keines Fehlers kennzeichnet (75). Daraufhin folgt eine Umschaltung auf das in Figur 4 näher dargestellte Stellglieddiagnoseprogramm (76). Bei einer einfachen Ausführungsform kann dieses natürlich auch entfallen.

Ein Sonderfall liegt noch dann vor, wenn das n-FF den Wert O beinhaltet hat (68), also wenn überhaupt kein Drehzahlsignal vorher vorkam. Es wird dann geprüft, ob das S-FF gesetzt ist, also ob gestartet worden ist (82). Ist dies nicht der Fall, wird zum regulären Diagnoseprogramm zurückgekehrt. Ist dies der Fall, dann muß der Drehzahlgeber defekt sein, da ein Start ohne Drehzahlsignal nicht möglich ist. Ein entsprechendes Fehlerwort wird eingespeichert (83) und zum regulären Diagnoseprogramm zurückgekehrt.

Das in Figur 4 dargestellte Verfahren zur Stellglieddiagnose wird nur wirksam, wenn weder durch die Vorstartdiagnose (53) noch durch die Kurzdiagnose (61) noch durch die Volldiagnose (72) ein Fehler erkannt wurde. Der Fehler kann mit großer Wahrscheinlichkeit nur noch in einem Stellglied zu suchen sein, wobei mit dem Begriff Stellglied alle durch das Schaltgerät gesteuerten elektrischen Vorrichtungen gemeint sind, insbesondere auch Schaltendstufen und motorisch betriebene Aggregate.

Zunächst wird abgefragt, ob der Leerlaufschalter Sl die Signalfolge 1-0-1 erzeugt (79). Ist dies der Fall, betätigt also der Prüfmechaniker den Leerlaufschalter entsprechend, so wird durch das Schaltgerät 10 eine festgelegte Signalfolge z. B. an die Zündungsendstufe 18 gelegt. Diese Signalfolge kann z. B. ein 100-Hz-Signal mit einer definierten Schließzeit (z. B. 3 m sec) von 30 Sekunden Dauer sein (78). Hier genügt natürlich das Voltmeter 47 nicht mehr zur Diagnose, sondern dieses Signal muß mit entsprechenden Meßgeräten kontrolliert werden. Daraufhin wird ein nächster Sensor betätigt, im dargestellten Fall der Vollastschalter Sv, der in der Reihenfolge 0-1-0 durch den Prüfmechaniker zu betätigen ist (79). Wird dies durch das Stellglieddiagnoseprogramm erkannt (79), so wird die Kraftstoffpumpe mit 10 sekündiger Dauer angesteuert (80). Um dies zu kontrollieren wird keine Meßvorrichtung benötigt, da die laufende Kraftstoffpumpe zu hören ist und die Zeitdauer abgeschätzt bzw. mit einer Uhr festgestellt werden kann. Auf diese Weise werden nacheinander weitere Endstufen geprüft, was durch den allgemeinen Programmschritt (81) angedeutet werden soll. Wesentlich dabei ist, daß bei jeder Betätigung eines Eingangs- bzw. eines Gebers, in einer bestimmten, vorgegebenen Weise ein bestimmtes vorgegebenes Ausgangssignal an einer zu steuernden Vorrichtung erzeugt wird. Was zu betätigen ist und was wo die Folge sein muß, kann der Prüfmechaniker aus Tabellen entnehmen. Das Stellglieddiagnoseprogramm (76) wird dabei jeweils solange in Programmschleifen durchlaufen, bis ein solches Eingangssignal in der vorgegebenen Weise erzeugt wird.

Das in Figur 4 dargestellte Stellglieddiagnoseprogramm (76) dient zur Überprüfung von zu steuernden Vorrichtungen, deren Funktion das Schaltgerät 10 durch direkte Signalabfrage nicht kontrollieren kann. Natürlich ließen sich durch entsprechende Rückführungen von den zu steuernden Vorrichtungen zum Schaltgerät 10 diese Vorrichtungen auch in der Volldiagnose überprüfen. Durch die Rückführungen wäre natürlich ein zusätzlicher Aufwand an Verkabelungen notwendig, sowie weitere Eingänge im Schaltgerät 10 erforderlich.

Es sei noch festgehalten, daß die Überprüfung der zu steuernden Vorrichtungen mit Hilfe des Stellglieddiagnoseprogramms (76) auch durch das Voltmeter 47 erfolgen kann, wenn entsprechende Ausgangssignalfolgen an die betreffenden Vorrichtungen bei vorgeschriebener Betätigung von Gebern erzeugt werden. Dazu müßte eine Umschaltung des entsprechenden Ausgangs des Schaltgeräts 10 auf das Voltmeter 47 durch Umschalter vorgesehen sein.

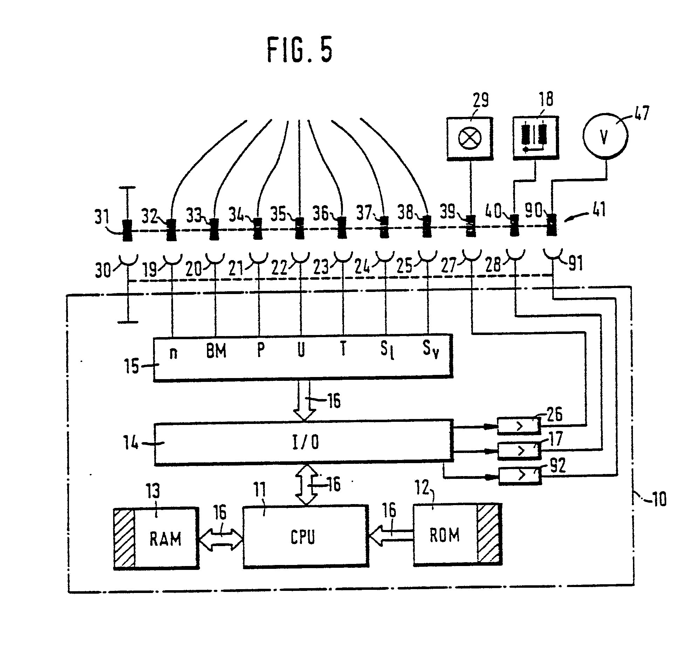

Das in Figur 5 dargestellte zweite Ausführungsbeispiel entspricht weitgehend dem in Figur 1 dargestellten ersten Ausführungsbeispiel, jedoch entfällt der Zwischenstecker 42. Gleiche Bezugszeichen bezeichnen gleiche Bauteile und sind nicht noch einmal beschrieben. Der Mehrfachstecker 41 weist einen zusätzlichen Steckkontakt 90 auf, dem eine zusätzliche Klemme 91 zugeordnet ist. Der Eingangs/-Ausgangs-Kreis 14 ist über eine zusätzliche Verstärkerstufe 92 mit der Klemme 91 verbunden. Der Steckkontakt 41 ist mit dem Spannungsmeßgerät 47 verbunden, das in diesem Ausführungsbeispiel fest installiert, vorzugsweise der Drehzahlmesser des Kraftfahrzeugs ist. Anstelle eines Spannungsmeßgeräts kann im Rahmen der Erfindung natürlich auch ein Strommeßgerät treten. Dieses müßte entsprechend durch eine Stromquelle gesteuert werden, die entweder über eine Signalfolge mit einem dem Fehler-Datenwort entsprechenden Tastverhältnis oder über ein sonstiges Spannungssignal steuerbar ist.

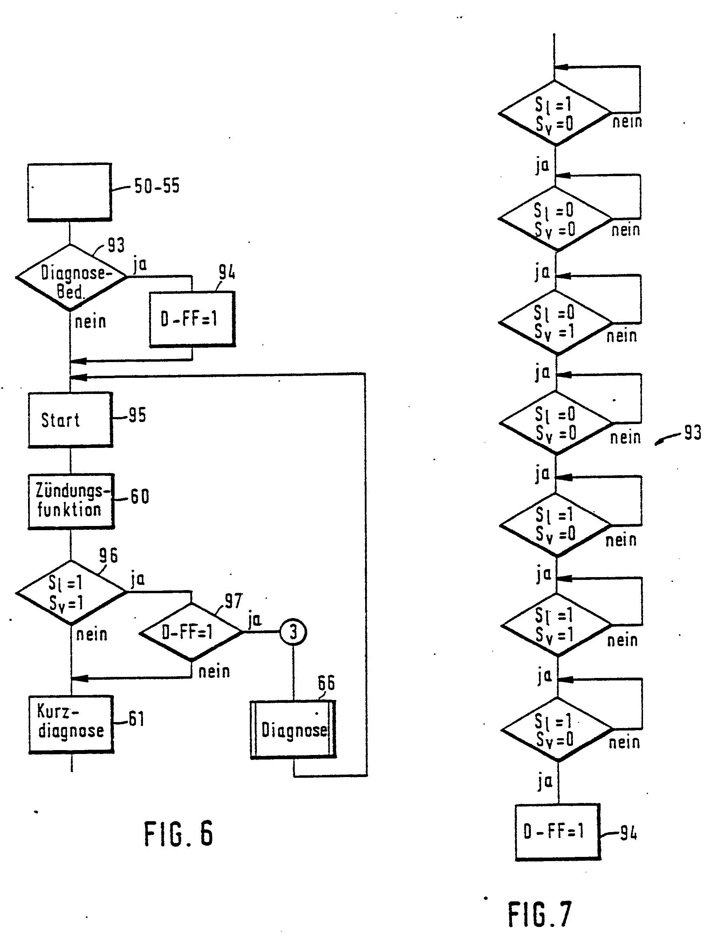

Die Wirkungsweise des in Figur 5 dargestellten Ausführungsbeispiels wird im folgenden anhand des in Figur 6 dargestellten Flußdiagramms erläutert. Der wesentliche Gedanke des zweiten Ausführungsbeispiels besteht darin, daß zur Diagnose kein Zwischenstecker benötigt wird und der Mehrfachstecker 41 nicht entfernt zu werden braucht. Er verbleibt während der Diagnose in eingestecktem Zustand. Nach Einschalten der Zündung laufen zunächst wie beim ersten Ausführungsbeispiel die Verfahrensschritte 50 bis 55 ab. Danach wird bei noch abgestellter Brennkraftmaschine eine Diagnosebedingung (93) abgefragt, die in Figur 7 näher erläutert ist und im wesentlichen darauf beruht, daß eine bestimmte Signalfolge des Leerlaufschalters Sl und des Vollastschalters Sv erzeugt werden muß. Ist die Diagnosebedingung erfüllt, so wird ein Diagnose-Flipflop (D-FF) auf den Wert 1 gesetzt (94). Danach wird die Brennkraftmaschine gestartet (95). Sollte der Start während der Prüfung der Diagnosebedingung erfolgen, d. h., sollte die Diagnosebedingung nicht voll durchgeführt werden, so wird, insbesondere durch ein Interrupt-Signal, der noch austehende Teil der Diagnosebedingung übersprungen. Das Diagnose-Flipflop wird in diesem Fall natürlich nicht gesetzt. Nach dem Start wird die reguläre Zündungsfunktion (60) ausgeführt. Danach wird geprüft, ob das Diagnoseprogramm ablaufen soll. Dies erfolgt durch Abfragen der Bedingung, ob bei nunmehr laufender Brennkraftmaschine sowohl der Leerlaufschalter Sl wie auch der Vollastschalter Sv betätigt sind. Eine solche Signalkombination kann im Normalbetrieb der Brennkraftmaschine nie vorkommen. Sie wird z. B. dadurch erzeugt, daß bei sich im Leerlauf befindlicher Brennkraftmaschine (Sl = 1) durch den Prüfmechaniker im Motorraum der Vollastschalter Sv betätigt wird, der sich z. B. an der Drosselklappenachse des Vergasers befinden kann. Ist die Diagnose-Umschaltbedingung (96) somit erfüllt, so wird geprüft, ob das Diagnose-Flipflop gesetzt ist (97). Ist dies ebenfalls der Fall, so wird auf die Diagnose (66) umgeschaltet, die in Figur 3 näher dargestellt ist. Der Einstieg erfolgt allerdings nunmehr an der Stelle 3, da die Funktionen 67, 68, 82, 83 für dieses Ausführungsbeispiel nicht mehr benötigt werden. Nach erfolgter Diagnose wird zum Start zurückgekehrt, d. h., die Brennkraftmaschine kann nach Belieben erneut gestartet werden. Ist eine der Bedingungen 96 oder 97 nicht erfüllt, so setzt sich der Funktionsablauf gemäß Figur 2 mit der Kurzdiagnose 61 und den sich daran anschließenden Funktionsabläufen fort.

Die Diagnosebedingung (93), die bei stehendem Fahrzeug vorgegeben wird, ist in Figur 7 näher dargestellt. Sie wird dadurch vorgegeben, daß eine bestimmte Reihenfolge von Schaltkombinationen der beiden Schalter Sl und Sv erzeugt wird. Zunächst ist das Fahrpedal in der Leerlaufstellung (Sl = 1 und Sv = 0). Danach betätigt der Fahrer das Fahrpedal (Sl = 0 und Sv = 0) bis zum Endanschlag (Sl = 0 und Sv = 1). Anschließend läßt er das Fahrpedal wieder los (Sl = 0 und Sv = 0) bis es wieder in die ursprüngliche Stellung zurückgeht (Sl = 1 und Sv = 0). Danach wird im Motorraum zusätzlich der Vollastschalter betätigt (Sl = 1 und Sv = 1), eine Bedingung, die im Normalbetrieb nie vorkommt. Nach dem Loslassen des Vollastschalters Sv ist die alte Bedingung wieder erreicht (Sl = 1 und Sv = 0). Sind diese Betätigungen in der richtigen Reihenfolge erfolgt, so wird gemäß dem zuvor Beschriebenen das Diagnose-Flipflop gesetzt (94). Nachdem diese Diagnosebedingung hergestellt ist, wird gemäß Figur 6 das Fahrzeug gestartet und eine Prüfstrecke abgefahren. Auf dieser Prüfstrecke soll das zuvor erkannte Fehlerwort wieder eingespeichert werden. In die Werkstatt zurückgekehrt, wird bei laufendem Motor wiederum im Motorraum die Schaltbedingung Sl = 1 und Sv = 1 (96) hergestellt. Danach erfolgt die automatische Diagnose (66). Um zu gewährleisten, daß nicht infolge eines kurzzeitigen Fehlers während der Prüffahrt die Bedingung Sl = 1 und Sv = 1 erzeugt wird und das Fahrzeug ungewollt in den Diagnosebetrieb übergeht und dadurch stehen bleibt, kann die Bedingung 96 so ausgelegt sein, daß die Betätigung des Vollastschalters Sv solange aufrechterhalten werden muß, bis die Brennkraftmaschine stillsteht. Erst dann darf der Schalter Sv losgelassen werden. Kurzzeitige Fehler während der Fahrt werden dadurch nicht mehr wirksam.

Es sei festgehalten, daß die vorgesehene Einschaltbedingung für den Diagnosebetrieb auch in beliebiger anderer Reihenfolge erfolgen kann. Weiterhin kann eine solche Einschaltbedingung in einer einfacheren Ausführungsform auch nur bei laufendem Motor oder nur bei stillstehendem Motor vorgegeben werden. Auch können beispielsweise die Diagnosebedingungen 93 und 96 vertauscht werden. Schließlich können auch andere Kombinationen von Gebersignalen zur Erzeugung des Diagnosebefehls herangezogen werden. Die beiden Schalter Sv und Sl haben dabei den Vorteil, daß sie leicht betätigbar sind und somit die entsprechende Kombination von Schaltbefehlen leicht erzeugbar ist.

Weiterhin ist noch zu erwähnen, daß die Abfrage der Schaltfolge 93 und/oder die Ausgabe des Fehlercodes über das im Fahrzeug vorhandene Spannungs- oder Strommeßgerät 47 natürlich auch bei laufendem Motor, d. h. bei normaler Funktion des Steuergerätes 10 erfolgen kann, falls Programmbelastung des Rechners, bzw. Echtzeitprobleme dies zulassen. Der Vorteil der oben beschriebenen Ausführung liegt jedoch in der geringstmöglichen Zusatzbelastung der Steuergeräte-Normalfunktion, sowie in der absoluten Verhinderung eines unerwünschten Sprunges in die Diagnosefunktion.

## Patentansprüche

1. Verfahren zur Selbstüberprüfung von mikrorechnergesteuerten Schaltgeräten, insbesondere in Kraftfahrzeugen, die in Abhängigkeit von angelegten Gebersignalen vorgegebene Funktionen ausführen und bei Fehlererkennung ein entsprechendes Datenwort abspeichern, dadurch gekennzeichnet, daß zur Fehlerausgabe das gespeicherte Datenwort in ein elektrisches Signal oder eine Signalfolge umgewandelt (70, 75) und durch Strom- oder Spannungsmessung erfaßt wird.

2. Verfahren nach Anspruch 1, dadurch gekennzeichnet, daß im Programmdurchlauf des Schaltgeräts (10) Kurzdiagnoseprogramm (61) vorgesehen ist.

3. Verfahren nach Anspruch 1 oder 2, dadurch gekennzeichnet, daß die Umwandlung des gespeicherten Fehler-Datenworts in eine Spannung oder einen Strom oder eine Signalfolge auf einen Schaltbefehl hin erfolgt.

4. Verfahren nach Anspruch 3, dadurch gekennzeichnet, daß bei Nichtvorliegen eines gespeicherten Fehler-Datenworts (69) eine Volldiagnose (72) erfolgt.

5. Verfahren nach Anspruch 3 oder 4, dadurch gekennzeichnet, daß der Schaltbefehl durch definierte Vorgabe, insbesondere Kurzschließen, wenigstens eines Gebersignals, vorzugsweise zweier Gebersignale, gegeben wird.

6. Verfahren nach Anspruch 5, dadurch gekennzeichnet, daß einer der Schaltbefehle ein für das Funktionieren des Systems unbedingt notwendiges Gebersignal, insbesondere das Drehzahlsignal (n) ist.

7. Verfahren nach Anspruch 6, dadurch gekennzeichnet, daß bei fehlendem, unbedingt notwendigem Gebersignal und Vorliegen einer gespeicherten Information, daß zunächst ein Start des Antriebsaggregats erfolgt war, ein einen defekten Geber für dieses Gebersignal kennzeichnendes Fehler-Datenwort eingespeichert wird (83).

8. Verfahren nach Anspruch 5, dadurch gekennzeichnet, daß die definierte Vorgabe zweier Gebersignale, die durch Betätigung vorhandener Schalteinrichtungen erzeugbar sind und die im Normalbetrieb nicht gleichzeitig auftreten können, den Schaltbefehl erzeugt.

9. Verfahren nach Anspruch 8, dadurch gekennzeichnet, daß die definierte Vorgabe aus einer festlegbaren Folge dieser Gebersignale (SI, Sv) besteht.

10. Verfahren nach Anspruch 8 oder 9, dadurch gekennzeichnet, daß die definierte Vorgabe aus einer Gebersignalkombination besteht, die im Normalbetrieb nicht auftreten kann (SI = 1 und Sv = 1).

11. Verfahren nach wenigstens einem der Ansprüche 8 bis 10, dadurch gekennzeichnet, daß die definierte Vorgabe wenigstens teilweise bei abgestellter und/oder laufender Brennkraftmaschine erfolgen muß.

12. Verfahren nach einem der vorhergehenden Ansprüche, dadurch gekennzeichnet, daß nach vollzogener Diagnose und Nicht-Vorliegen eines gespeicherten Fehler-Datenworts eine Fehlerausgabe erfolgt, die das Nichterkennen eines Fehlers kennzeichnet (75).

13. Verfahren nach einem der vorhergehenden Ansprüche, dadurch gekennzeichnet, daß nach vollzogener Diagnose und Nicht-Vorliegen eines gespeicherten Fehler-Datenworts ein Programm (76) zur Überprüfung von durch das Schaltgerät gesteuerten elektrischen Vorrichtungen, insbesondere Schaltendstufen und Stellglieder, gestartet wird.

14. Verfahren nach Anspruch 13, dadurch gekennzeichnet, daß bei einer vorgegebenen Geberbetätigung durch das Schaltgerät (10) eine vorgegebene Test-Signalfolge (78 bzw. 80) in einer durch das Schaltgerät (10) gesteuerten Vorrichtung erzeugt wird.

15. Vorrichtung zur Selbstüberprüfung von mikrorechnergesteuerten Schaltgeräten, insbesondere in Kraftfahrzeugen, die in Abhängigkeit von angelegten Gebersignalen vorgebbare Funktionen ausführen und bei Fehlererkennung ein entsprechendes Datenwort abspeichern, nach einem Verfahren nach einem der vorhergehenden Ansprüche, dadurch gekennzeichnet, daß ein Diagnose-Zwischenstecker (42) den Eingängen des Schaltgeräts vorgeschaltet ist, daß dieser einen Schalter (43, 44) aufweist zum Kurzschließen wenigstens eines Eingangs, vorzugsweise zweier Eingänge (19, 23) als Ausgabe- und/oder Volldiagnosebefehl.

16. Vorrichtung nach Anspruch 15, dadurch gekennzeichnet, daß ein Eingang der Drehzahlgebereingang ist.

17. Vorrichtung nach Anspruch 15 oder 16, dadurch gekennzeichnet, daß ein Voltmeter (47) bzw. Amperemeter an den Diagnose-Zwischenstecker (42) anschließbar oder angeschlossen ist.

18. Vorrichtung nach einem der Ansprüche 15 bis 17, dadurch gekennzeichnet, daß für die Diagnose mehrerer Schaltgeräte (10) ein einziger an jedes Schaltgerät angepaßter Diagnose-Zwischenstecker (42) vorgesehen ist.

19. Vorrichtung zur Selbstüberprüfung von mikrorechnergesteuerten Schaltgeräten, insbesondere in Kraftfahrzeugen, die in Abhängigkeit von angelegten Gebersignalen vorgegebene Funktionen ausführen und bei Fehlererkennung ein entsprechendes Datenwort abspeichern, nach einem Verfahren nach einem der Ansprüche 1 bis 14, dadurch gekennzeichnet, daß einer der Ausgänge des Schaltgeräts (10) mit einem Spannungsmeßgerät (47) oder Strommeßgerät im Kraftfahrzeug verbunden ist, das im Diagnosefall die Diagnosewerte und im Normalbetrieb eine Normalfunktion anzeigt.

20. Vorrichtung nach einem der Ansprüche 15 bis 19, dadurch gekennzeichnet, daß eine Kontrollampe (29) zur Anzeige eines eingespeicherten Fehler-Datenworts vorgesehen ist.

21. Vorrichtung nach Anspruch 20, dadurch gekennzeichnet, daß ein Schalter (45) zum Umschalten des Ausgangs für die Kontrollampe (29) auf einen Meßgeräteanschluß (46) vorgesehen ist.

22. Vorrichtung nach Anspruch 21, dadurch gekennzeichnet, daß der Schalter (45) zum Umschalten mit dem Schalter (43, 44) zum Kurzschließen mechanisch verbunden ist.

**Claims**

1. Method for self-checking of microcomputer-controlled switching devices, particularly in motor vehicles, which execute assigned functions in dependence on applied transducer signals and on detection of an error store an appropriate data word, characterized in that, for outputting the error, the stored data word is converted into an electric signal or a signal sequence (70, 75) and is detected by current or voltage measurement.

2. Method according to Claim 1, characterized in that a short diagnostic program (61) is provided in the program run of the switching device (10).

3. Method according to Claim 1 or 2, characterized in that the stored error data word is converted into a voltage or a current or a signal sequence in consequence of a switching command.

4. Method according to Claim 3, characterized in that a full diagnostic analysis (72) is carried out if no stored error data word (69) is present.

5. Method according to Claim 3 or 4, characterized in that the switching command is given by a specified assignment, particularly short-circuiting, of at least one transducer signal, preferably two transducer signals.

6. Method according to Claim 5, characterized in that one of the switching commands is a transducer signal which is absolutely necessary for the operation of the system, particularly the rotational speed signal (n).

7. Method according to Claim 6, characterized in that if the absolutely necessary transducer signal is missing and in the presence of stored information that at first a start of the driving unit had taken place, an error data word characterizing a defective transducer for this transducer signal is stored (83).

8. Method according to Claim 5, characterized in that the specified assignment of two transducer signals which can be generated by actuating existing switching devices and which cannot occur at the same time in normal operation, generates the switching command.

9. Method according to Claim 8, characterized in that the specified assignment consists of a determinable sequence of these transducer signals (Sl, Sv).

10. Method according to Claim 8 or 9, characterized in that the specified assignment consists of a transducer signal combination which cannot occur in normal operation (Sl = 1 and Sv = 1).

11. Method according to at least one of Claims 8 to 10, characterized in that the specified assignment must take place at least partially with a stopped and/or running internal combustion engine.

12. Method according to one of the preceding claims, characterized in that, after completed diagnostic analysis and non-presence of a stored error data word, an error output occurs which characterizes the non-detection of an error (75).

13. Method according to one of the preceding claims, characterized in that, after completed diagnostic analysis and non-presence of a stored error data word, a program (76) for checking electric devices controlled by the switching device, particularly switching output stages and actuators, is started.

14. Method according to Claim 13, characterized in that a predetermined test signal sequence (78 or 80) is generated in a device controlled by the switching device (10) when a predetermined transducer actuation is carried out by the switching device (10).

15. Device for self-checking of microcomputer-controlled switching devices, particularly in motor vehicles, which excute predeterminable functions in dependence on applied transducer signals and on detection of an error store a corresponding data word, according to a method according to one of the preceding claims, characterized in that a diagnostic adapter plug (42) is connected in series with the inputs of the switching device, and this plug has a switch (43, 44) for short-circuiting at least one input, preferably two inputs (19, 23) as output and/or full diagnostic commands.

16. Device according to Claim 15, characterized in that one input is the rotational speed transducer input.

17. Device according to Claim 15 or 16, characterized in that a voltmeter (47) or ammeter can be connected or is connected to the diagnostic adapter plug (42).

18. Device according to one of Claims 15 to 17, characterized in that a single diagnostic adapter plug (42) adapted to each switching device is provided for the diagnostic analysis of several switching devices (10).

19. Device for self-checking of microcomputer-controlled switching devices, particularly in motor vehicles, which execute predetermined functions in dependence on applied transducer signals and on detection of an error store a corresponding data word, according to a method according to one of Claims 1 to 14, characterized in that one of the outputs of the switching device (10) is connected to a voltage measuring instrument (47) or current measuring instrument in the motor vehicle, which instrument indicates the diagnostic values in the case of a diagnostic analysis, and a normal function in the case of normal operation.

20. Device according to one of Claims 15 to 19, characterized in that a control lamp (29) is provided for indicating a stored error data word.

21. Device according to Claim 20, characterized in that a switch (45) is provided for switching the output for the control lamp (29) to a measuring instrument connection (46).

22. Device according to Claim 21, characterized in that the switch (45) for switching over is mechanically joined to the switch (43, 44) for short-circuiting.

**Revendications**

1. Procédé pour l'auto-vérification d'appareils de commutation commandés par microcalculateurs, notamment dans des véhicules automobiles, et qui accomplissent des fonctions prédéfinies sous la dépendance de signaux d'indicateurs qui leur sont appliqués et qui, en cas de détection d'un défaut, mémorisent un mot de données correspondant, procédé caractérisé en ce que, pour la mise en évidence d'un défaut, le mot de données ainsi mémorisé est converti en un signal électrique ou bien en une succession de signaux (70, 75) et détecté par mesure du courant ou de la tension.

2. Procédé selon la revendication 1, caractérisé en ce que, dans le déroulement du programme de l'appareil de commutation (10), il est prévu un programme de diagnostic court (61).

3. Procédé selon la revendication 1 ou 2, caractérisé en ce que la conversion du mot de données de défaut mémorisé en une tension ou en un courant ou bien en une succession de signaux, s'effectue sur un ordre de commutation.

4. Procédé selon la revendication 3, caractérisé en ce que, lorsqu'un mot de données de défaut mémorisé (69) n'existe pas, un diagnostic complet (72) est effectué.

5. Procédé selon la revendication 3 ou 4, caractérisé en ce que l'ordre de commutation est donné par des indications préalables définies, notamment des court-circuits d'au moins un signal d'indicateur et, de préférence, de deux signaux d'indicateur.

6. Procédé selon la revendication 5, caractérisé en ce qu'un des ordres de commutation, est un signal d'indicateur absolument nécessaire pour le fonctionnement du système, notamment le signal de vitesse de rotation (n).

7. Procédé selon la revendication 6, caractérisé en ce qu'en l'absence d'un signal d'indicateur absolument nécessaire, et en la présence d'une information mémorisée selon laquelle un démarrage de l'équipement d'entraînement a tout d'abord été effectué, un mot donné de défaut caractérisant un indicateur défectueux pour ce signal d'indicateur, est mémorisé (83).

8. Procédé selon la revendication 5, caractérisé en ce que l'indication préalable définie de deux signaux d'indicateur, qui sont susceptibles d'être obtenus par actionnement de dispositifs de commutation existants, et qui ne peuvent pas intervenir simultanément en fonctionnement normal, engendrent l'ordre de commutation.

9. Procédé selon la revendication 8, caractérisé en ce que l'indication préalable définie est constituée par une succession susceptible d'être déterminée de ces signaux d'indicateur (SI, Sv).

10. Procédé selon la revendication 8 ou 9, caractérisé en ce que l'indication préalable définie est constituée d'une combinaison de signaux d'indicateur qui ne peut pas intervenir en fonctionnement normal (SI = 1 et Sv = 1).

11. Procédé selon une au moins des revendications 8 à 10, caractérisé en ce que l'indication préalable définie peut s'effectuer au moins partiellement lorsque le moteur à combustion interne est arrêté et/ou en marche.

12. Procédé selon une des précédentes revendications, caractérisé en ce qu'après diagnostic complet et absence d'un mot de données de défaut mémorisé, il est donné une indication de défaut qui caractérise la non-détection d'un défaut (75).

13. Procédé selon une des précédentes revendications, caractérisé en ce qu'après diagnostic complet et absence d'un mot de données de défaut mémorisé, un programme (76) pour la vérification des dispositifs électriques commandés par l'appareil de commutation, notamment d'étages terminaux de commutation et d'organes de réglage, est démarré.

14. Procédé selon la revendication 13, caractérisé en ce que, après un actionnement défini d'un indicateur par l'appareil de commutation (10), une succession de signaux d'essais prédéfinis (78 ou bien 80) est engendrée dans un dispositif commandé par l'appareil de commutation (10).

15. Dispositif pour l'auto-vérification d'appareils de commutation commandés par microcalculateurs, notamment dans des véhicules automobiles, qui accomplissent des fonctions prédéfinies sous la dépendance de signaux d'indicateurs qui leur sont appliqués et qui, dans le cas d'identification d'un défaut, mémorisent un mot de données correspondant, selon un procédé d'après l'une des revendications précédentes, dispositif caractérisé en ce qu'un connecteur intermédiaire de diagnostic (42) est branché en amont des entrées de l'appareil de commutation, et que celui-ci comporte un commutateur (43, 44) pour court-circuiter au moins une entrée, et de préférence deux entrées (19, 23) à titre d'ordre d'indication et/ou de diagnostic complet.

16. Dispositif selon la revendication 15, caractérisé en ce qu'une entrée est l'entrée de l'indicateur de vitesse de rotation.

17. Dispositif selon la revendication 15 ou 16, caractérisé en ce qu'un voltmètre (47) ou bien un ampèremètre, est susceptible d'être raccordé ou bien est raccordé au connecteur intermédiaire de diagnostic (42).

18. Dispositif selon une des revendications 15 à 17, caractérisé en ce que, pour le diagnostic de plusieurs appareils de commutation (10), il est prévu un unique connecteur intermédiaire de diagnostic (42) adapté à chaque appareil de commutation.

19. Dispositif pour l'auto-vérification d'appareils de commutation commandés par microcalculateurs, notamment dans des véhicules automobiles, et qui accomplissent des fonctions très définies sous la dépendance de signaux d'indicateur qui leur sont appliqués, et qui, lors de la détection d'un défaut, mémorisent un mot de données correspondant, selon le procédé d'après l'une des revendications 1 à 14, dispositif caractérisé en ce que l'une des entrées de l'appareil de commutation (10) est reliée à un appareil de mesure de la tension (47) ou bien à un appareil de mesure du courant dans le véhicule automobile, qui en cas de diagnostic indique les valeurs de diagnostic et dans le fonctionnement normal indique un fonctionnement normal.

20. Dispositif selon une des revendications 15 à 19, caractérisé en ce qu'une lampe de contrôle (29) est prévue pour indiquer un mot de données de défaut mémorisé.

21. Dispositif selon la revendication 20, caractérisé en ce qu'un commutateur (45) est prévu pour commuter la sortie pour la lampe de contrôle (29) sur un raccordement d'appareils de mesure (46).

22. Dispositif selon la revendication 1, caractérisé en ce que le commutateur (45) est relié mécaniquement en vue du court-circuit avec le commutateur (43, 44).

# FIG.1

FIG. 2

```
        ( Zündung  ein )  ─ 50

        [ Lampe  ein ]  ─ 51

        [  FF = 0  ]  ─ 52

        [ Vorstartdiagnose ]  ─ 53

              ◇ Fehler ◇ ─ 54    ja ───────┐
                 │ nein                      │
        [ Lampe  aus ]  ─ 55                 │
                 │                           │
              ◇ Start ◇ ─ 56   ja ──── [ S - FF = 1 ] ─ 57
                 │ nein                      │
                 ①                           │
              ◇ n-Signal ◇ ─ 58   nein ── ② │
                 │ ja  ─ 59                  │
        [  n - FF = 1  ]       [ Diagnose ] ─ 66
                 │
        [ Zündungsfunktion ] ─ 60
                 │
        [ Kurzdiagnose ] ─ 61
                 │
     nein ◇ Fehler ◇ ─ 62
                 │ ja
        [ Fehlerwort speichern ] ─ 63
                 │
        [ Lampe. ein ] ─ 64
                 │
        [ Ersatzfunktion ] ─ 65
```

# FIG.3

0 100 313

```
                                    (2)
                                     |
                                    /‾\
                      nein        /  67 \
      (1) ◄───────────────────── < T = 0  >
                                   \     /
                                    \   /
                                     \ /
                                      |
                                    /‾\
                      nein·      /  68  \
                          ◄───── < n-FF=7 >
            /‾\                  \       /
       82 /    \                 \     /
        /  S-FF=1 \    nein        \ /
       <          > ──────────────► ja
        \        /                  |
         \      /                /‾\
           ja               69 /    \      ja
           |                  / Fehlerwort\ ─────────┐
   ┌───────────────┐        < gespeichert >          │
83 │ Fehlerwort für│         \          /            │
   │ n-Geber defekt│          \        /             │
   │ abspeichern   │            nein                 │
   └───────────────┘             |                   │
  66 ──►                      /‾\                     │
                        71 /    \                     │
               nein       / Volldiagnose\            │
           ┌───────────── <  erfolgt   >             │
           │               \          /             │
  ┌────────────────┐        \        /              │
72│  Volldiagnose  │          ja                    │
  └────────────────┘          |                     │
           |          ┌──────────────┐              │
         /‾\          │ TV ausgeben  │ ─75          │
    73 /    \         │ "kein Fehler"│              │
      / Fehler\       └──────────────┘              │
nein <        >          |                          │
      \      /        ┌──────────────┐              │
       \    /         │Stellglieddiagnose│ ─76      │
         ja           └──────────────┘              │
         |                  |                       │
  ┌──────────────┐          |                       │
74│Fehlerwort    │          |                       │
  │speichern     │          |                       │
  └──────────────┘      ┌──────────────────┐        │
         |              │TV für Fehler ausgeben│ ─70 │
         |              └──────────────────┘        │
         |                  |                       │
         └──────┬───────────┴───────────────────────┘
               (1)
```

# FIG.4

$S_L = 1 \rightarrow 0 \rightarrow 1$ — 77

ja → 30 sec-Ansteuerung der Endstufe f = 100 Hz — 78

nein

$S_Y = 0 \rightarrow 1 \rightarrow 0$ — 79

ja → 10 sec-Ansteuerung Kraftstoffpumpe — 80

nein

76

81

# FIG. 5

FIG. 6

FIG. 7